# EUROPÄISCHE PATENTSCHRIFT

(11) **EP 0 966 368 B1**
(45) Veröffentlichungstag und Bekanntmachung des Hinweises auf die Patenterteilung: **28.11.2001**
(21) Anmeldenummer: 98904344.3
(22) Anmeldetag: 12.03.1998
(51) Int. Cl.: B60R 11/02

(54) **TELEFONGERÄT MIT EINER HALTESICHERUNG**
TELEPHONE APPARATUS WITH HOLD-SECURING DEVICE
APPAREIL TELEPHONIQUE AVEC DISPOSITIF DE RETENUE

(30) Priorität: 12.03.1997 DE 29705230 U
(43) Veröffentlichungstag der Anmeldung: 29.12.1999
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Roshardt, Werner Alfred, Dipl.-Phys.
(86) Internationale Anmeldenummer: IB9800316
(87) Internationale Veröffentlichungsnummer: WO9840244

(56) Entgegenhaltungen:
- EP-A- 0 617 535
- EP-A- 0 751 043
- WO-A-97/00792
- DE-A- 4 107 996
- US-A- 5 230 016
- PATENT ABSTRACTS OF JAPAN vol. 095, no. 008, 29.September 1995 & JP 07 135521 A (FUJITSU TEN LTD), 23.Mai 1995,
- PATENT ABSTRACTS OF JAPAN vol. 018, no. 083 (M-1558), 10.Februar 1994 & JP 05 294190 A (MATSUSHITA ELECTRIC IND CO LTD), 9.November 1993,

## Beschreibung

Die Erfindung betrifft ein Telefongerät gemäß Anspruch 1 sowie eine Aufnahme einrichtung gemäß Anspruch 10.

Aus der WO97/00792 ist ein Telefongerät zur Verwendung in einem Fahrzeug bekannt. Das bekannte Telefongerät hatte ein Handfunktelefon (Handy) und eine Aufnahmeeinrichtung mit einem Aufnahmeraum für das Handfunktelefon. Aus diesem Aufnahmeraum war das Handfunktelefon herausnehmbar. Gehalten wurde das Handfunktelefon mit einer an einer der Schmalseiten des Aufnahmeraums angeordneten Haltesicherung. Die Haltesicherung war ein Schieber, der über den über die Oberfläche des Handfunktelefons hinausragenden Antennenfuß geschoben wurde.

Aus der JP-A-07 135521 ist ein weiteres Telefongerät mit einem Handfunktelefon und einer Aufnahmeeinrichtung für dieses bekannt. An der unteren Seitenwand ihres Aufnahmeraums für das Handfunktelefon hatte die Aufnahmeeinrichtung eine hervorstehend, federnd gehaltene Nase, welche mit einem Stecker mechanisch verbunden war. Beim Einlegen des Handfunktelefons in den Aufnahmeraum schob dann die untere Schmalseite des Handfunktelefons diese Nase zurück, wodurch der Stecker elektrisch kontaktiert wurde. D.h. die Steckerkontakte waren energetisch und signalmäßig nur bei eingelegtem Handfunktelefon verbunden. Beim Herausnehmen des Handfunktelefons war diese Verbindung wieder gelöst. Ein Schutz des Steckers gegen hereinfallenden Schmutz in seine Steckermulde war jedoch nicht gegeben.

### Aufgabe der Erfindung

Aufgabe der Erfindung ist es, ein Telefongerät mit einem Handfunktelefon (Handy) insbesondere für die Verwendung in einem Fahrzeug zu schaffen, welches in einer "rauhen" Umgebung sicher gehalten sowie funktionssicher installiert und dennoch zur Entnahme gut greifbar ist.

### Lösung der Aufgabe

Die Aufgabe wird durch die Merkmale des Anspruchs 1 gelöst.

Die Freigabe des eingelegten Handfunktelefons erfolgt in vorteilhafter Weise durch eine Bewegung eines Halteelements der Haltesicherung parallel zu dessen Längsachse. Um diese Bewegung auslösen zu können, muß erst ein Auslöseknopf eingedrückt werden, dessen Knopfoberseite nur geringfügig über die Oberfläche des Halteelements hervorsteht. Das Überstehen ist derart gewählt, daß eine gute Ertastbarkeit gegeben ist. Eine Auslösung (Freigabe) ist erst durch ein Eindrücken unter die Oberfläche des Halteelements gegeben, wobei der Eindrückweg so groß gewählt ist, daß eine unwillkürliche Berührung keine Auslösung bewirkt.

Um ein "Klappern" des Handfunktelefons in der Aufnahmeeinrichtung bei "rauhen" Umgebungsbedingungen, wie sie in einem fahrenden Fahrzeug beispielsweise gegeben sind, zu verhindern, muß dieses satt in der Aufnahmeeinrichtung einliegen. Infolge von Temperaturund Materialunterschieden zwischen Handfunktelefon und Aufnahmeeinrichtung können beide klemmen. Um dennoch ein einwandfreies Herausnehmen zu gewährleisten, wird das Handfunktelefon bei der Freigabe zur Entnahme mit einem Hebel als Hervorschiebeelement aus der Aufnahmeeinrichtung um einen kleinen Wegbereich angehoben und dann mit einer Druckfeder, welche bevorzugt in der Aufnahmeeinrichtung unterhalb des Hörmuschelteils des Handfunktelefons angeordnet ist, im Griffposition gebracht.

Die Übertragung elektrischer Energie und/oder Signale erfolgt zwischen Handfunktelefon und Aufnahmeeinrichtung über einen Stecker, der bevorzugt im unteren Bereich der Aufnahmeeinrichtung angeordnet wird. Damit in diesen Bereich hineinfallende Metallgegenstände, wie Münzen, Haar- und Büroklammern, ... keinen Kurzschluß über den Kontakten des Steckers auslösen können, ist in einer Ausführungsvariante eine Steckerabdeckung vorgesehen. Bei herausgenommenem Handfunktelefon ist der Stecker immer abgedeckt. Erst beim Einschieben werden die Kontakte freigegeben.

Im folgenden werden Beispiele des erfindungsgemäßen Telefongeräts anhand von Zeichnungen näher erläutert. Weitere Vorteile der Erfindung ergeben sich aus dem nachfolgenden Beschreibungstext. Es zeigen:
- Fig. 1: einen Längsschnitt durch eine Ausführungsvariante eines erfindungsgemäßen Telefongeräts mit einem in eine Aufnahmeeinrichtung eingelegten, jedoch entriegelten und bereits hervorgehobenen Handfunktelefon, wobei eine Konsole zur Halterung der Aufnahmeeinrichtung nicht dargestellt ist; eine derartige Konsole zeigt im Querschnitt **Figur 3,**
- Fig. 2: eine Draufsicht auf die Aufnahmeeinrichtung des in **Figur 1** dargestellten Telefongeräts bei herausgenommenem Handfunktelefon,
- Fig. 3: einen Längsschnitt durch die Aufnahmeeinrichtung bei eingelegtem Handfunktelefon in gegenüber den **Figuren 1** und **2** vergrößerter Darstellung,
- Fig. 4: einen Längsschnitt analog **Figur 1** in größerer Darstellung bei herausgenommenem Handfunktelefon,
- Fig. 5: einen Längsschnitt durch den unteren einen Stecker aufweisenden Bereich der Aufnahmeeinrichtung bei herausgenommenem Handfunktelefon und abgedecktem Stecker,
- Fig. 6: eine zu **Figur 5** analoge Darstellung jedoch mit eingestecktem Handfunktelefon,
- Fig. 7 und Fig. 8: ein Funktionsschema für eine Variante zu einer Steckerabdeckung.

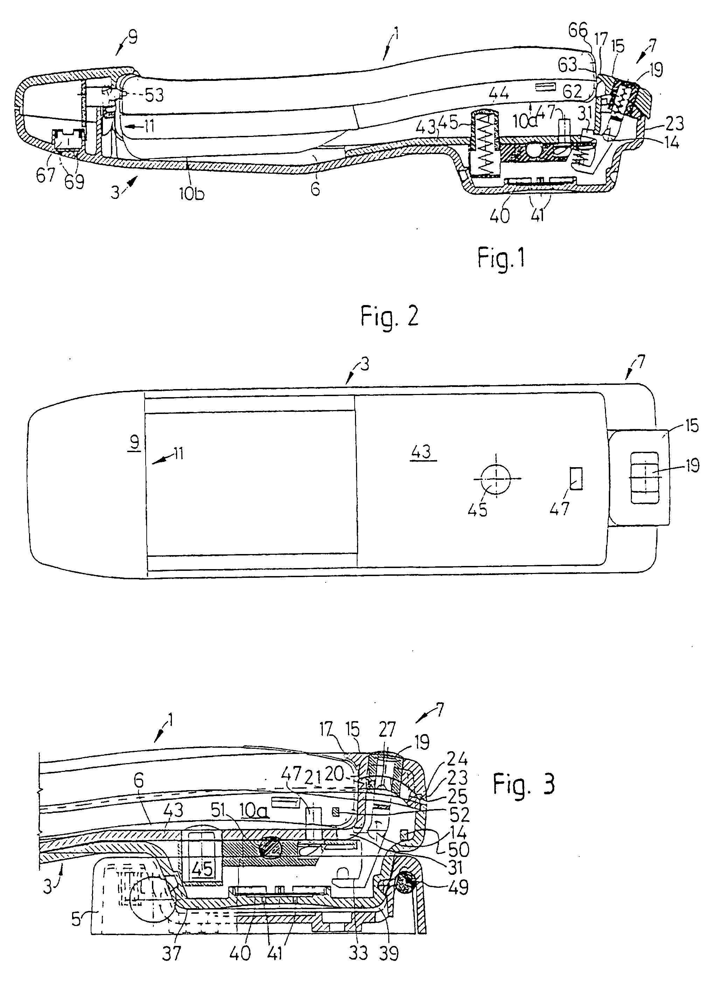

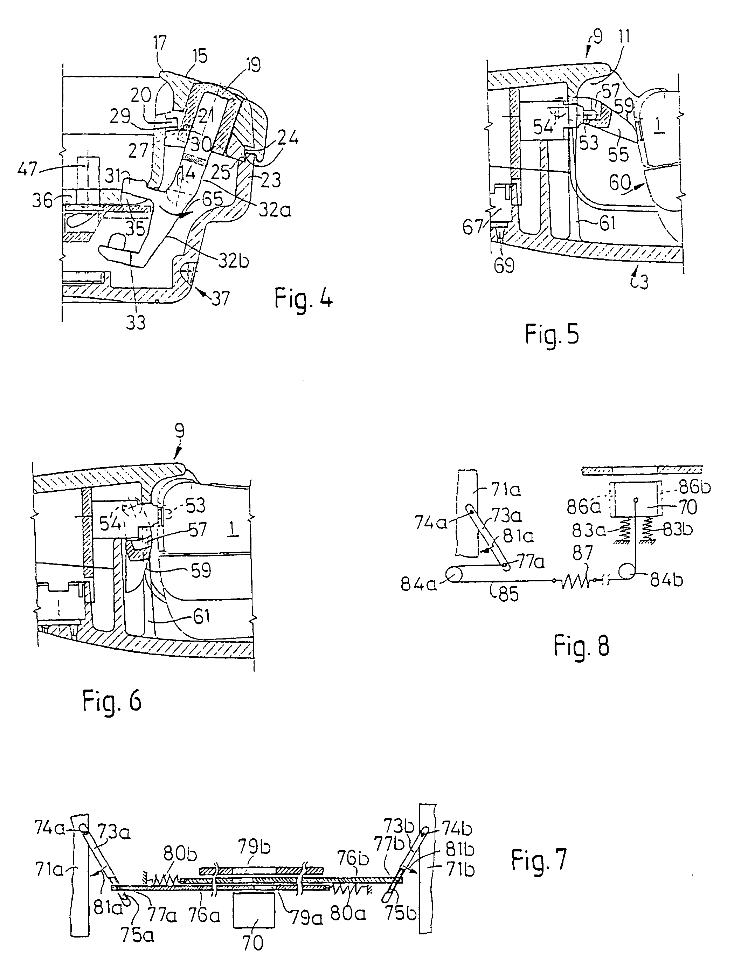

Das in **Figur 1** dargestellte Telefongerät, wie es insbesondere in Fahrzeugen eingesetzt wird, hat ein Handfunktelefon **1** und eine Aufnahmeeinrichtung **3.** Weitere Ausbildungen von Aufnahmeeinrichtungen **3** sind beispielsweise in der WO-A 97/00792 beschrieben. Gehalten wird die Aufnahmeeinrichtung **3** z. B. an der Fahrzeugverkleidung des Fahrzeugs mit einer Konsole **5,** in die sie entnehmbar eingeklinkt ist. Konsole **5** und Aufnahmeeinrichtung **3** sind über ein nicht dargestelltes Kabel energetisch und signalmäßig miteinander verbunden. Die Konsole **5** enthält ferner eine nicht dargestellte Sende- und Empfangseinheit für vom Handfunktelefon **1** via Antenne ausgesandte Signale. Das Handfunktelefon **1** ist in einem Aufnahmeraum **6** der Aufnahmeeinrichtung **3** herausnehmbar mit je einer seinen oberen sowie seinen unteren Oberflächenbereich übergreifenden Haltesicherung **7** und **9** gesichert gehalten. Die Haltesicherung **7** greift über einen Oberflächenbereich an der Schmalseite des Hörmuschelteils und die Haltesicherung **9** über einen Oberflächenbereich des Sprechmuschelteils **10a** bzw. **10b.** Die Haltesicherung **9** ist starr und als Vertiefung **11** im unteren Bereich **12** der Aufnahmeeinrichtung **3** ausgebildet und in den **Figuren 5** und **6** dargestellt.

Bei in den Aufnahmeraum **6** eingelegtem Handfunktelefon **1** fällt dessen Längsmittellinie **13** mit derjenigen der Aufnahmevorrichtung **3** sowie deren Aufnahmeraum **6** zusammen. Die Haltesicherung **7** ist um eine senkrecht zur Längsachse **13** verlaufende Schwenkachse **14** verschwenkbar ausgebildet. In den **Figuren 1** und **3** ist die Haltesicherung **7** im verriegelten Zustand und in **Figur 4** im entriegelten Zustand dargestellt. Die Haltesicherung **7** hat ein Halteelement **15** mit einer Nase **17,** welche im verriegelten Zustand über einen Oberflächenbereich im schmalseitigen Randbereich des Hörmuschelteils **10a** greift. Die Haltesicherung **7** hat einen federnd gehaltenen Auslöseknopf **19,** der senkrecht zur Schwenkachse **14** in das Halteelement **15** hineindrückbar ist. Die Oberseite des Auslöseknopfes **19** steht soweit aus der Oberfläche des Halteelements **15** hervor, daß die Knopfoberfläche gerade gut ertastbar ist. Der Querschnitt ist so groß gewählt, daß er mit einem Finger gut in das Halteelement **15** eindrückbar ist. Der Querschnitt, das Überstehen und der Auslöseweg sind derart gewählt, daß eine gute Ertastbarkeit gegeben ist, eine ungewollte Auslösung jedoch weitgehendst unterbunden ist.

Der Auslöseknopf **19** hat einen Nippel **21,** der bei verriegelter Haltesicherung **7** in eine Nut **20** der Basis **23** des oberen Verbindungsteils der Aufnahmeeinrichtung **3** greift. Eine Schwenkbewegung der Haltesicherung **7** ist erst nach einer Herausnahme des Nippels **21** aus der Nut **20** möglich. Beim Herabdrücken des Auslöseknopfes **19** wird der Nippel **21** aus der Nut **20** herausgeschoben; siehe insbesondere **Figur 4.** Bei herausgeschobenem Nippel **21** ist die Haltesicherung **7** parallel zur Längsachse **13** nach außen um die Schwenkachse **14** schwenkbar, bis eine untere Kante **24** des Halteelements **15** an einer Ausnehmung **25** in der Basis **23** anschlägt. Gleichzeitig rastet der Nippel **21** in einer weiteren Nut **27** ein. Die Haltesicherung **7** ist in ihrer Offenposition fixiert. Im Gegensatz zur relativ tiefen steilen, vom Aufnahmeraum **6** abgewandten Wand **29** der Nut **20** ist die zum Aufnahmeraum **6** hingewandte Wand **30** der Nut **27** weniger tief und zudem abgeschrägt ausgebildet. Die Ausbildung der Wand **30** erlaubt beim Einlegen des Handfunktelefons **1,** wie unten beschrieben, ein Herausgleiten des Nippels **21** bis zum erneuten Einrasten in die Nut **20.**

Die Haltesicherung **7** ist als zweiarmiger, um die Schwenkachse **14** schwenkbarer Hebel ausgebildet. An dem einen Hebelarm **32a** ist das Halteelement **7** mit dem Auslöseknopf **19** angeordnet und am anderen Hebelarm **32b** das Hervorschiebeelement **31** für das Handfunktelefon **1** und eine Aufnahme **33** für eine Druckfeder **34,** welche in den **Figuren 3** und **4** nicht dargestellt ist. Das Hervorschiebeelement **31** ist als Ausleger annähernd senkrecht zum Hebelarm **32b** ausgebildet und ragt durch eine Öffnung **35** im Boden **36** der Aufnahmeeinrichtung **3** in deren Aufnahmeraum **6** bei herausgenommenem Handfunktelefon **1** hinein.

Die Aufnahmeeinrichtung **3** ist in ihrem oberen Teil auf der Rückseite mit einer vorstehenden topfartigen Ausbuchtung **37** versehen. Die Kontur dieser Ausbuchtung **37** ist der Mulde **39** der unten beschriebenen Konsole **5** angepaßt. Sie ist bevorzugt viereckig mit abgerundeten Ecken ausgebildet; es können aber auch andere Formgebungen verwendet werden. Die Ausbuchtung **37** trägt eine Hörmuschel **40** mit akustisch transparenten Kanälen **41** zu ihrer Aussenseite und ist mit einer Abdeckung **43** als Teil des Bodens **36** gegen den Aufnahmeraum **6** abgedeckt. Durch die Abdeckung **43** greift ein mit einer Druckfeder **44** versehener Stössel **45** zum Hervorschieben des freigegebenen und bereits angehobenen Handfunktelefons **1** aus dem Aufnahmeraum **6.** Ferner greift ein Antennenstecker **47** durch diese Abdeckung **43.**

Die Konsole **5** weist klinkenartige Halteelemente auf, welche die Aufnahmeeinrichtung **3** herausnehmbar halten. Eines dieser Halteelemente ist in **Figur 3** am Ort **A** dargestellt. Ferner hat die Konsole **5** einen Magneten **49,** der mit einem "Reed-Schalter" **50** eines Reed-Relais zusammenwirkt. Dieses Reed-Relais schaltet bei in die Konsole **5** eingelegter Aufnahmeeinrichtung **3** auf sog. Freihören und Freisprechen um.

Auch in der Aufnahmeeinrichtung **3** ist ein Magnet **51** vorhanden, der mit einem Reed-Schalter **52** zusammenarbeitet und bei in die Aufnahmeeinrichtung **3** eingelegtem Handfunktelefon **1** dessen Hör- und Sprechmuschel ausschaltet und diejenigen der Aufnahmeeinrichtung **3** einschaltet.

Die elektrische Energie- und/oder Signalübertragung zwischen der Aufnahmeeinrichtung **3** und dem Handfunktelefon **1** erfolgt über einen in den **Figuren 5** und **6** schematisch dargestellten Stecker **53** als Interface in der Vertiefung **11.** Der Stecker **53** ist mit einer um eine Schwenkachse **54** schwenkbaren Steckerabdeckung **55** abdeckbar. Die Schwenkachse **54** verläuft senkrecht zur Längsachse **13.** Die Steckerabdeckung **55** ist schwertartig, in Analogie zu einem Schwert eines Segelschiffes, ausgebildet und ist mit einer nicht dargestellten Feder selbsttätig in die in **Figur 5** gezeigte Position bringbar. D.h. in einer weiteren Analogie, wie das Schwert eines Surfbrettes einklappbar. Die Steckerabdeckung **55** hat zur Aufnahme des Steckers **53** einen an nur einer Seite begrenzten und mit einer "Überdachung" versehenen Hohlraum **57.** Dieser Hohlraum **57** kann nun derart ausgebildet werden, daß die gesamte Steckerleiste mit einem durchgehenden Hohlraum überdeckt wird oder für jeden Kontaktstift eine Kammer gebildet ist. Beim Einlegen des Handfunktelefons **1** in die Aufnahmeeinrichtung **3** gleitet die Seite **59** der Steckerabdeckung **55** an der unteren Stirnseite **60** des Handfunktelefons **1** unter Einschwenken in eine Öffnung **61** in der Vertiefung 11. Nach dem Einschwenken der Abdeckung **55** ist der Stecker **55** freigegeben, wie in **Figur 5** dargestellt ist.

Nach dem Einlegen in die untere Haltesicherung unter Vollzug der elektrischen Steckerverbindung wird der obere die Hörmuschel enthaltende Teil des Handfunktelefons **1** in die Aufnahmeeinrichtung **3** eingedrückt. Die Haltesicherung **7** ist, wie in den **Figuren 1, 2** und **4** dargestellt, geöffnet. Beim Einschwenken wird als erstes der gefederte Stössel **45** gegen den Boden **36** gedrückt, dann die Antennensteckerverbindung vorgenommen. Kurz vor Beendigung der Eindrückbewegung drückt die Unterkante **62** der oberen Stirnseite **63** des Handfunktelefons **1** auf das Hervorschiebeelement **31** und schiebt dieses in die Öffnung **35** zurück. Durch das Eindrücken wird der Hebelarm **32b** in Richtung des Pfeiles **65** um die Schwenkachse **14** geschwenkt; die geringe Haltekraft hervorgerufen durch den in der Nut **27** liegenden Nippel **21** wird aufgrund der schrägen Wand **30** mit verhältnismäßig geringem Kraftaufwand überwunden. Mit der Schwenkbewegung **65** wird das Halteelement **15** mit seiner Nase **17** über die Oberkante **66** der oberen Stirnseite **63** des Handfunktelefons **1** geschoben und der Nippel **21** rastet in die Nut **20** ein. Das Handfunktelefon **1** ist nun gesichert in der Aufnahmeeinrichtung **3** gehalten und das Reed-Relais, bestehend aus Magnet **51** und Reed-Schalter **52,** schaltet.

Die elektrische Verknüpfung der beiden Reed-Relais bestehend aus Magnet **51** und Reed-Schalter **52** sowie Magnet **49** und Reed-Schalter **50** ist derart ausgelegt, daß bei in der Aufnahmeeinrichtung **3** eingelegtem Handfunktelefon **1** und in die Konsole **5** eingeschnappter Aufnahmeeinrichtung **3** auf Freihören und -sprechen umgeschaltet ist. Es sind ein externes Mikrofon und ein externer Lautsprecher zugeschaltet. Die Handfunktelefon eigene Sprechmuschel und Hörmuschel sowie diejenigen der Aufnahmeeinrichtung **3** sind ausgeschaltet.

Ist die Aufnahmeeinrichtung **3** aus der Konsole **5** ausgeklinkt und das Handfunktelefon **1** in der Aufnahmeeinrichtung **3** einliegend, so sind die Hörmuschel **40** in der Ausbuchtung **37** und eine Sprechkapsel **67** im unteren Teil der Aufnahmeeinrichtung **3** aktiviert. Die Sprechkapsel **67** ist über akustische Kanäle **69** mit der Umwelt verbunden; das externe Mikrofon und der externe Lautsprecher sowie Sprech- und Hörmuschel des Handfunktelefons **1** sind ausgeschaltet.

Ist das Handfunktelefon **1** aus der Aufnahmeeinrichtung **3** entnommen, so sind dessen Hör- und Sprechmuschel aktiviert; diejenigen der Aufnahmeeinrichtung **3** sowie der externe Lautsprecher und das externe Mikrofon sind ausgeschaltet. Dieselbe Verschaltung ergibt sich auch bei in die Konsole **5** eingeklinkter Aufnahmeeinrichtung **3** und herausgenommenem Handfunktelefon **1.**

Bei einer bevorzugten Ausführung des Telefongeräts ist eine Umschalttaste vorgesehen, mit der Hör- und Sprechmuschel der Aufnahmeeinrichtung **3** aktivierbar sind, damit ein zweiter Gesprächspartner an einem mit dem entnommenen Handfunktelefon **1** geführten Gespräch aktiv teilnehmen kann. Als Umschalttaste kann nun beispielsweise der Stössel **45** bei aus der Konsole **5** entnommener Aufnahmeeinrichtung **3** dienen, der dann für die Dauer des Gesprächs eingedrückt sein muß. Der Stössel **45** kann zu diesem Zweck auch eine Drehverriegelung analog einem Bajonnetverschluß aufweisen, welche ihn in einer vollständig in den Boden **36** des Aufnahmerraums **6** eingedrückten Lage dauernd festhält. Durch eine Rückdrehung wird dann der Stössel **45** wieder freigegeben. Bevorzugt wird man die Stösseloberseite mit einer Riffelung für eine gute Griffigkeit zur eindrückenden Fingerkuppe versehen. Ein Einrasten des Stössels **36** erfolgt bei einem Eindrückweg der tiefer liegt als bei eingesetztem Handfunktelefon **1.** Auch kann hierfür eine Umschalttaste auf dem unteren Teil der Aufnahmeeinrichtung angeordnet werden. Es kann auch ein Taste oder eine Tastenkombination des Handfunktelefons zum Umschalten verwendet werden, was den Vorteil haben würde, daß der zweite Gesprächspartner sich nicht selbständig eine Mithör- und Sprechberechtigung gewähren kann.

Anstatt den Stecker **53** im unteren Teil der Aufnahmeeinrichtung **3** anzuordnen, kann er auch mit der oberen Haltesicherung **7** kombiniert werden, wobei der Zusammensteckvorgang mit der Bewegung des Halteelements erfolgen würde. Eine weitere Möglichkeit eines Steckerschutzes zeigen die **Figuren 7** und **8.** Zum besseren Verständnis ist die Abdeckfunktion in **Figur 6,** getrennt von einer Ausschiebefunktion eines im unteren Teil der Aufnahmeeinrichtung angeordneten Steckers **70** in **Figur 7** dargestellt

Eine zur Vertiefung **11** analoge Vertiefung hat gemäß der Ausführungsvariante der **Figuren 6** und **7** bei herausgenommenem Handfunktelefon **1** in seinen seitlichen Wandungen **71a** und **71 b** je eine einschwenkbare Zunge **73a** und **73b.** Die Zungenschwenklager **74a** und **74b** sind innerhalb der Wandungen **71a** und **71b** angeordnet. Die den Schwenklagern **74a** und **74b** abgewandten Zungenenden liegen unterhalb des Bodens der Vertiefung. An ihnen ist in einem Längsschlitz **75a** bzw. **75b** je eine Verschiebeplatte **76a** und **76b** mit je einer Achse **77a** bzw. **77b** beweglich gehalten. Beide Verschiebeplatten **76a** und **76b** haben einen Schlitz **79a** bzw. **79b,** dessen Länge um eine Toleranz größer ist als die halbe Breite des Steckers **70.** Die Schlitzbreite ist um eine Toleranz größer als die Dicke des Steckers **70.** Beide Verschiebeplatten **76a** und **76b** sind an den den Achsen **77a** und **77b** entgegengesetzten Enden mit je einer Feder **80a** bzw. **80b** in Längsrichtung gespannt. **Figur 7** zeigt die Bauelemente in einer Lage bei herausgenommenem Handfunktelefon **1.** Die Öffnungen **79a** und **79b** liegen bei herausgenommenem Handfunktelefon **1** derart, daß die Oberseite des Steckers **70** in der Vertiefung spritzwasserdicht abgedeckt ist.

Wird nun die untere Stirnseite **60** des Handfunktelefons **1** in die Vertiefung eingeschoben, so werden die in den Wänden **71a** und **71b** angeordneten Zungen **73a** und **73b** in Richtung der Pfeile **81a** und **81b** entgegen der Kraft der Federn **80a** und **80b** eingedrückt. Hierdurch werden die beiden Verschiebeplatten **76a** und **76b** verschoben, bis die beiden Schlitze **79a** und **79b** übereinanderliegend aneinander anschließen. Der Stecker **70** ist nun frei, um das andere Kupplungsteil in der unteren Stirnseite **60** des Handfunktelefons **1** aufzunehmen.

Die Verschiebefunktion des Steckers **70,** wobei auch hier als Variante eine Buchse angeordnet werden könnte, wird anhand der schematischen Darstellung in **Figur 8** erläutert. Diese Figur zeigt den Zustand des Steckers **70** ebenfalls bei herausgenommenem Handfunktelefon **1.** Hierbei wird der Stecker **70** entgegen der Kraft von beidseitigen Druckfedern **83a** und **83b** in einer Stellung unterhalb des Vertiefungsbodens gehalten. Die beiden Schlitze **79a** und **79b** in den Verschiebeplatten sind, wie in **Figur 6** dargestellt, in der spritzwassergeschützten Lage. Die in **Figur 8** dargestellte Zunge **73a** (identisch mit der in **Figur 6** dargestellten) wird über die Kraft der Feder **80a (Figur 7)** in der gezeichneten Lage gehalten. Von der Achse **77a** (identisch mit derjenigen in **Figur 6**) ist ein über zwei Rollen **84a** und **84b** umgelenkter Seilzug **85** zum Stecker **70** geführt. Der Stecker **70** ist senkrecht zum Boden der Vertiefung verschiebbar in zwei Längsführungen **86a** und **86b** geführt. Als Längsführungen **86a** und **86b** können beispielsweise die Ränder in einer Platte dienen. Der Seilzug **85** ist mit einer in ihn eingesetzten Feder **87** unter Spannung gehalten.

Wird nun die untere Stirnseite **60** des Handfunktelefons **1** eingeschoben, so wird, wie bereits oben ausgeführt, die Zunge **73a** in Pfeilrichtung **81a** bewegt. Hierdurch könnte der Stecker **70** durch die Kraft der Federn **83a** und **83b** nach oben geschoben werden. Dies ist jedoch noch nicht möglich, da die beiden Schlitze **79a** und **79b** noch nicht den gesamten Steckerteilquerschnitt freigegeben haben. Der freiwerdende Seilzugweg des Seilzugs **85** wird von der Feder **87** aufgenommen. Erst wenn die beiden Schlitze **79a** und **79b** durch das Einschieben weit genug bewegt sind, schnellt der Stecker **70** nach oben in den passenden Kupplungsteil in der unteren Stirnseite **60** des Handfunktelefons **1**.

Zur Umgehung dieser verzögerten zweiten Bewegung kann für die Verschiebung des Steckers **70** eine dritte Zunge verwendet werden. In diesem Fall werden dann die drei Zungen nicht mehr mit einer geraden Einlauflinie versehen, sondern mit einem gekrümmten, den geforderten Bewegungen angepaßten Verlauf.

Anstelle der oben beschriebenen mechanischen Schutzvorrichtung kann auch eine gummielastische spritzwasserdichte Schutzeinrichtung verwendet werden. Der im Unterteil oder in einem anderen Bereich angeordnete Kupplungsteil hat eine auch nach unten offene Schutzwandung. Diese Schutzeinrichtung besteht, vereinfacht gesagt, aus einer fluidgefüllten Blase unter Druck, welche im Bereich der unteren Öffnung der Schutzwandung eine Membran aufweist. Die Wandung der Blase besteht aus elastischem Material. Der Elastizitätskoeffizient der Membran ist kleiner als derjenige der restlichen Blasenwandung. Infolge des Blasendrucks stülpt sich diese Membran in den freien Bereich der Schutzwandung und dichtet somit spritzwasserdicht die von der Schutzwand umgebenen Kontakte ab. Beim Einstecken der unteren Stirnseite **60** des Handfunktelefons **1** in den Unterteil wird durch dessen Kupplungsteil die Membran aus dem Freiraum der Schutzwandung herausgedrückt.

Je nach Ausführung des Handfunktelefons **1** kann die Kopplung für die Signal- und/oder Energieübertragung im unteren Teil der Aufnahmeeinrichtung **3** an der Seite oder an einer anderen Stelle vorgesehen werden. Die Kupplungsteile können derart ausgebildet werden, daß die Signal- und/oder Energieübertragung berührungslos, insbesondere induktiv oder über elektromagnetische Wellen erfolgt. Die induktive Übertragung wird man insbesondere für die Energieübertragung z. B. zu einem Akkumulator im Handfunktelefon wählen. Es könnte hiermit aber auch eine Übertragung des nachrichtentechnischen Signals erfolgen. Elektromagnetische Wellen, insbesondere sichtbares oder infrarotes Licht wird man für die nachrichtentechnische Übertragung und für die Übertragung von Steuersignalen verwenden. Hierzu wird man im Handfunktelefon sowie auch in der Vertiefung bzw. in deren umliegenden Bereichen Sender-/Empfängerdioden installieren, welche lediglich durch jeweils ein transparentes Fenster voneinander getrennt sind. Das Fenster dient als Schutzeinrichtung zum Schutz vor dem Eindringen von Flüssigkeit und/oder Fremdkörpern. Bei dieser Ausführungsart ist auch ein ausgezeichneter Schutz bei eingelegtem Handfunktelefon gegeben. Diese Konstruktion läßt sich problemlos wasserdicht, insbesondere in einer Verbindung mit der induktiven Energieübertragung ausbilden.

## Patentansprüche

1. Telefongerät, insbesondere zur Verwendung in einem Fahrzeug, mit einem Handfunktelefon (Handy) **(1)** und einer Aufnahmeeinrichtung **(3),** in deren Aufnahmeraum **(6)** das Handfunktelefon **(1)** herausnehmbar, mit wenigstens einer an einer der Schmalseiten des Aufnahmeraums angeordneten Haltesicherung gesichert gehalten ist, wobei die Haltesicherung wenigstens ein Halteelement **(15)** hat, welches beim Einlegen in die Aufnahmeeinrichtung **(3)** einen der Oberflächenbereiche des Handfunktelefons **(1)** selbsttätig teilweise übergreift und wobei ein Hervorschiebeelement **(31, 45)** vorhanden ist, welches das Handfunktelefon **(1)** aus dem Aufnahmeraum **(6)** heraus in eine Grifflage bringt, **dadurch gekennzeichnet, dass** das Halteelement **(15)** zur Freigabe des Handfunktelefons **(1)** in dessen Längsachsrichtung nach außen verschiebbar, insbesondere verschwenkbar ausgebildet ist.

2. Telefongerät nach Anspruch 1, **dadurch gekennzeichnet, daß** das bewegbare Halteelement **(15)** in Halteposition mit einer Verriegelungseinrichtung **(21, 20)** mechanisch verriegelt ist, welche beim Einlegen des Handfunktelefons **(1)** in den Aufnahmeraum **(6)** der Aufnahmeeinrichtung **(3)** sich selbsttätig verriegelt.

3. Telefongerät nach einem der Ansprüche 1 oder 2, **dadurch gekennzeichnet, daß** die das bewegbare Halteelement **(15)** aufweisende Haltesicherung **(7)** zur Auslösung einer Halteverriegelung auf ihrer Oberseite einen Auslöseknopf **(19)** aufweist, dessen Oberseite gerade soweit hervorsteht, daß er ertastbar, aber durch Berührung mit einem annähernd ebenen Gegenstand nicht unbewußt auslösbar ist, dessen Querschnitt aber so groß gewählt ist, daß er zur Auslösung mit einem Finger unter die Oberfläche des Halteelements **(15)** drückbar ist.

4. Telefongerät nach einem der Ansprüche 1 bis 3, **dadurch gekennzeichnet, daß** die das bewegbare Halteelement **(15)** aufweisende Haltesicherung **(7)** ein Hervorschiebeelement **(31)** hat, welches das Handfunktelefon **(1)** im freizugebenden Zustand anhebt, um bevorzugt dessen seitliche Klemmung im Aufnahmeraum **(6)** und/oder um eine Kontaktklemmung in einem lösbaren Stecker **(53, 70)** zu überwinden und insbesondere beim Einlegen des Handfunktelefons **(1)** dieses auf das Hervorschiebeelement **(31)** einwirkt, um die bewegbare Haltesicherung **(7)** in eine selbsttätig verriegelnde Position zu bringen.

5. Telefongerät nach einem der Ansprüche 1 bis 4, **gekennzeichnet durch** einen federnd gehaltenen, im Aufnahmeraum **(6)** angeordneten Stössel **(45),** der das Handfunktelefon **(1)** aus der Aufnahmeeinrichtung **(3)** bei Freigabe **durch** die bewegbare Haltesicherung **(7)** in eine Position zum guten Ergreifen anhebt.

6. Telefongerät nach einem der Ansprüche 1 bis 5, **gekennzeichnet durch** eine insbesondere an der Fahrzeugverkleidung anbringbare Haltekonsole **(5),** in welche die Aufnahmeeinrichtung **(3)** einklinkbar ist, sowie vorzugsweise Sensoren **(49, 50, 51, 52),** welche den eingelegten Zustand des Handfunktelefons **(1)** in die Aufnahmeeinrichtung **(3)** und/oder deren eingeklinkten Zustand in die Konsole **(5)** feststellen und entsprechende Funktionen ein- bzw. ausschalten, wobei der jeweilige Meldesensor bevorzugt ein Reed-Relais ist.

7. Telefongerät, insbesondere nach einem der Ansprüche 1 bis 6 mit einem auftrennbaren Interface (**47, 53, 70)** zur elektrischen Energie- und/oder Signalübertragung zwischen Handfunktelefon **(1)** und Aufnahmeeinrichtung **(3), gekennzeichnet durch** eine federbelastete in der Aufnahmeeinrichtung **(3)** angeordnete über deren Stecker bringbare Stekkerabdeckung **(55)** zum Schutz der Steckerkontakte bei aus der Aufnahmeeinrichtung **(3)** herausgenommenem Handfunktelefon **(19),** wobei die Steckerabdeckung **(55)** einen in den Aufnahmeraum **(6)** der Aufnahmeeinrichtung **(3)** hineinragenden Betätigungsteil **(59)** hat, der **durch** die Einsteckbewegung des Handfunktelefons **(1)** in den Aufnahmeraum **(6)** die Kontakte für eine Verbindung mit dem Handfunktelefon **(1)** freigibt.

8. Telefongerät nach Anspruch 7, **dadurch gekennzeichnet, daß** die Steckerabdeckung **(55)** als ein um eine Achse schwenkbarer Riegel mit einem einseitig offenen Hohlraum **(57)** ausgebildet ist, der in herausgeschwenktem Zustand die Kontakte aufnimmt und bevorzugt eine vorstehende Nase zum Anliegen an die Handfunktelefonunterseite **(60)** sowie eine Vertiefung **(61)** im unteren Randbereich des Aufnahmeraums **(6)** zum Einschwenken bei eingelegtem Handfunktelefon **(1)** hat.

9. Telefongerät nach einem der Ansprüche 1 bis 8, **dadurch gekennzeichnet, daß** die Aufnahmeeinrichtung eine Hör- und/oder Sprechmuschel aufweist, welche bei entnommenem Handfunktelefon **(1)** aktivierbar ist bzw. sind, damit ein weiterer Gesprächspartner an einem mit dem Handfunktelefon (**1**) geführten Gespräch teilhaben kann.

10. Aufnahmeeinrichtung **(3)** eines Telefongeräts nach einem der Ansprüche 1 bis 9 mit einem Aufnahmeraum **(6)** für ein aus diesem herausnehmbaren Handfunktelefon (Handy) **(1)** des Telefongeräts, wobei der Aufnahmeraum **(6)** wenigstens eine an einer seiner Schmalseiten angeordnete Haltesicherung hat, welche wenigstens ein Halteelement **(15)** hat, welches derart ausgebildet ist, dass es beim Einlegen des Handfunktelefons **(1)** in die Aufnahmeeinrichtung **(3)** einen der Oberflächenbereiche des Handfunktelefons **(1)** selbsttätig teilweise übergreift, und ein Hervorschiebeelement **(31, 45)** vorhanden ist, mit dem das Handfunktelefon **(1)** aus dem Aufnahmeraum **(6)** heraus in eine Grifflage bringbar ist, **dadurch gekennzeichnet, dass** das Halteelement **(15)** zur Freigabe des Handfunktelefons **(1)** in dessen Längsachsrichtung nach außen verschiebbar, insbesondere verschwenkbar ausgebildet ist.

11. Aufnahmeeinrichtung **(3)** nach Anspruch 10, **dadurch gekennzeichnet, dass** das bewegbare Halteelement **(15)** in Halteposition mit einer Verriegelungseinrichtung **(21, 20)** mechanisch verriegelt ist, welche beim Einlegen des Handfunktelefons **(1)** in den Aufnahmeraum **(6)** der Aufnahmeeinrichtung **(3)** sich selbsttätig verriegelt.

12. Aufnahmeeinrichtung **(3)** nach Anspruch 10 oder 11, **dadurch gekennzeichnet, dass** die das bewegbare Halteelement **(15)** aufweisende Haltesicherung **(7)** zur Auslösung einer Halteverriegelung auf ihrer Oberseite einen Auslöseknopf **(19)** aufweist, dessen Oberseite gerade soweit hervorsteht, daß er ertastbar, aber durch Berührung mit einem annähernd ebenen Gegenstand nicht unbewußt auslösbar ist, dessen Querschnitt aber so groß gewählt ist, daß er zur Auslösung mit einem Finger unter die Oberfläche des Halteelements (**15**) drückbar ist.

13. Aufnahmeeinrichtung **(3)** nach einem der Ansprüche 10 bis 12, **dadurch gekennzeichnet, dass** die das bewegbare Halteelement **(15)** aufweisende Haltesicherung **(7)** ein Hervorschiebeelement **(31)** hat, mit dem das Handfunktelefon **(1)** im freizugebenden Zustand anhebbar ist, um bevorzugt dessen seitliche Klemmung im Aufnahmeraum **(6)** und/oder um eine Kontaktklemmung in einem lösbaren Stecker **(53, 70)** zu überwinden und insbesondere das Hervorschieebelement **(31)** derart ausgebildet ist, dass beim Einlegen des Handfunktelefons **(1)** dieses auf das Hervorschiebeelement **(31)** einwirkt, um die bewegbare Haltesicherung **(7)** in eine selbsttätig verriegelnde Position zu bringen.

14. Aufnahmeeinrichtung **(3)** nach einem der Ansprüche 10 bis 13 **gekennzeichnet durch** einen federnd gehaltenen, im Aufnahmeraum **(6)** angeordneten Stössel **(45),** mit dem das Handfunktelefon **(1)** aus der Aufnahmeeinrichtung **(3)** bei Freigabe **durch** die bewegbare Haltesicherung **(7)** in eine Position zum guten Ergreifen anhebbar ist.

15. Aufnahmeeinrichtung **(3)** nach einem der Ansprüche 10 bis 14, **dadurch gekennzeichnet, dass** sie in eine insbesondere an der Fahrzeugverkleidung anbringbare Haltekonsole **(5)** einklinkbar ist und vorzugsweise Sensoren **(49, 50, 51, 52)** aufweist, mit denen der eingelegte Zustand des Handfunktelefons **(1)** in die Aufnahmeeinrichtung **(3)** und/oder der eingeklinkte Zustand in die Konsole **(5)** feststellbar und mit denen entsprechende Funktionen ein- bzw. ausschaltbar sind, wobei der jeweilige Meldesensor bevorzugt ein Reed-Relais ist.

16. Aufnahmeeinrichtung **(3)** nach einem der Ansprüche 10 bis 15, **gekennzeichnet durch** einen Stecker eines auftrennbaren Interfaces (**47, 53, 70**) zur elektrischen Energieund/oder Signalübertragung zum Handfunktelefon **(1)** mit einer federbelasteten über den Stecker des Interfaces bringbaren Steckerabdeckung **(55)** zum Schutz der Steckerkontakte bei herausgenommenem Handfunktelefon **(19),** wobei die Steckerabdeckung **(55)** einen in den Aufnahmeraum **(6)** der Aufnahmeeinrichtung **(3)** hineinragenden Betätigungsteil **(59)** hat, der **durch** die Einsteckbewegung des Handfunktelefons **(1)** in den Aufnahmeraum **(6)** die Kontakte für eine Verbindung mit dem Handfunktelefon **(1)** freigibt.

17. Aufnahmeeinrichtung **(3)** nach Anspruch 16, **dadurch gekennzeichnet, dass** die Stekkerabdeckung **(55)** als ein um eine Achse schwenkbarer Riegel mit einem einseitig offenen Hohlraum **(57)** ausgebildet ist, der in herausgeschwenktem Zustand die Kontakte aufnimmt und bevorzugt eine vorstehende Nase zum Anliegen an die Handfunktelefonunterseite (**60**) sowie eine Vertiefung **(61)** im unteren Randbereich des Aufnahmeraums **(6)** zum Einschwenken bei eingelegtem Handfunktelefon **(1)** hat.

18. Aufnahmeeinrichtung **(3)** nach einem der Ansprüche 10 bis 17, **gekennzeichnet durch** eine Hör- und/oder Sprechmuschel, welche bei entnommenem Handfunktelefon **(1)** aktivierbar ist bzw. sind, damit ein weiterer Gesprächspartner an einem mit dem Handfunktelefon **(1)** geführten Gespräch teilhaben kann.

## Claims

1. Telephone apparatus, in particular for use in a vehicle, comprising a hand-held cellular telephone (mobile) (1) and a holster arrangement (3) having a holding compartment (6) in which the cellular telephone (1) is securely held in a removable manner with at least one hold-securing device arranged on one of the narrow sides of the holding compartment, the hold-securing device having at least one retaining element (15) which automatically engages over one of the surface regions of the cellular telephone (1) when the latter is being inserted into the holster arrangement (3), and there being provided a displacement element (31, 45) which moves the cellular telephone (1) forwards out of the holding compartment (6) and into a position in which it can be grasped,
**characterised in that** in order to release the cellular telephone (1) the retaining element (15) is adapted to be displaced outwards, more particularly swivelled, in the longitudinal axial direction of said telephone.

2. Telephone apparatus according to claim 1, **characterised in that** the movable retaining element (15) is mechanically locked in the holding position by a locking device (21, 20) which locks automatically whenever the cellular telephone (1) is being inserted into the holding compartment (6) of the holster arrangement (3).

3. Telephone apparatus according to either of claims 1 and 2, **characterised in that** in order to initiate a holding and locking action, the hold-securing device (7) incorporating the movable retaining element (15) features on its upper face an activating button (19) the upper face of which protrudes just far enough for it to be discernible to the touch, but not to be accidentally activated by coming into contact with a more or less plane object, and the cross-section of which is, however, large enough to enable it to be pressed with one finger beneath the surface of the retaining element (15) in order to activate it.

4. Telephone apparatus according to any of claims 1 to 3,
**characterised in that** the hold-securing device (7) incorporating the movable retaining element (15) has a displacement element (31) which in release mode lifts up the cellular telephone (1) in order preferentially to overcome lateral sticking thereof in the holding compartment (6) and/or any sticking of contacts in a detachable plug connector (53, 70), and in particular whenever the cellular telephone (1) is being inserted it acts on the displacement element (31), so as to move the movable hold-securing device (7) into a position in which it locks automatically.

5. Telephone apparatus according to any of claims 1 to 4,
**characterised by** a resiliently held plunger (45), arranged in the holding compartment (6), which lifts the cellular telephone (1) up out of the holster arrangement (3) into a position where it can be readily grasped upon being released by the movable hold-securing device.

6. Telephone apparatus according to any of claims 1 to 5,
**characterised by** a holding console (5) which in particular is adapted to be mounted on the vehicle trim and into which the holster arrangement (3) can be snap-fitted, and preferably also by sensors (49, 50, 51, 52) which detect when the cellular telephone (1) has been inserted into the holster arrangement (3) and/or the latter has been snap-fitted into the console (5), and switch corresponding functions on and off, the respective signalling sensor preferably being a reed relay.

7. Telephone apparatus according to any of claims 1 to 6, having a divisible interface (47, 53, 70) for the transmission of electrical energy and/or signals between the cellular telephone (1) and the holster arrangement (3), **characterised by** a spring-loaded connector cover (55) which is arranged in the holster (3) and adapted to be moved over the connector thereof, to protect the connector contacts whenever the cellular telephone (1) has been removed from the holster arrangement (3), the connector cover (55) having an actuating part (59) which projects into the holding compartment (6) of the holster arrangement (3) and by the movement of inserting the cellular telephone (1) into the holding compartment (6) releases the contacts for a connection to the cellular telephone (1).

8. Telephone apparatus according to claim 7, **characterised in that** the connector cover (55) is in the form of a bar which is adapted to swivel on an axis and has a cavity (57) open on one side which receives the contacts when it is in the swivelled-out state and preferably has a protruding nose designed to bear against the underside (60) of the cellular telephone, and a depression (61) in the lower peripheral region of the holding compartment (6) for swivelling-in whenever the cellular telephone (1) is inserted.

9. Telephone apparatus according to any of claims 1 to 8,
**characterised in that** the holster arrangement incorporates an earpiece and/or mouthpiece which is/are adapted to be activated when the cellular telephone (1) is removed, to enable a further person to take part in a conversation being held on the cellular telephone (1).

10. Holster arrangement (3) of a telephone apparatus according to any of claims 1 to 9, comprising a holding compartment (6) for a hand-held cellular telephone (mobile) (1) of said telephone apparatus, said cellular telephone being adapted to be removed from said holding compartment (6), and the holding compartment (6) having at least one hold-securing device which is arranged on one of its narrow sides and has at least one retaining element (15) which is constructed in such a way that whenever the cellular telephone (1) is being inserted into the holster arrangement (3) said retaining element (15) automatically and partially engages over one of the surface regions of the cellular telephone (1), and there being provided a displacement element (31, 45) by means of which the cellular telephone (1) can be moved out of the holding compartment (6) and into a position in which it can be grasped, **characterised in that** to release the cellular telephone (1) the retaining element (15) is adapted to be displaced outwards, more particularly swivelled, in the longitudinal direction of said telephone (1).

11. Holster arrangement (3) according to claim 10,
**characterised in that** in the retaining position the movable retaining element (15) is mechanically locked by a locking device (21, 20) which locks automatically whenever the cellular telephone (1) is inserted into the holding compartment (6) of the holster arrangement (3).

12. Holster arrangement (3) according to claim 10 or 11,
**characterised in that** to initiate a holding and locking action, the hold-securing device (7) incorporating the movable retaining element (15) features on its upper face an activating button (19) the upper face of which protrudes just far enough for it to be discernible to the touch, but not to be accidentally activated by coming into contact with a more or less plane object, and the cross-section of which is, however, large enough to enable it to be pressed with one finger beneath the surface of the retaining element (15) in order to activate it.

13. Holster arrangement (3) according to any of claims 10 to 12, **characterised in that** the hold-securing device (7) incorporating the movable retaining element (15) has a displacement element (31) which in release mode lifts up the cellular telephone (1) in order preferentially to overcome lateral sticking thereof in the holding compartment (6) and/or any sticking of contacts in a detachable plug connector (53, 70), and in particular the displacement element (31) is so designed that whenever the cellular telephone (1) is being inserted it acts on said displacement element (31) so as to move the movable hold-securing device (7) into a position in which it locks automatically.

14. Holster arrangement (3) according to any of claims 10 to 13, **characterised by** a resiliently held plunger (45), arranged in the holding compartment (6), by which the cellular telephone (1) can be lifted up out of the holster arrangement (3) into a position where it can be readily grasped upon being released by the movable hold-securing device.

15. Holster arrangement (3) according to any of claims 10 to 14, **characterised in that** it is adapted to be snap-fitted into a holding console (5) which in particular is adapted to be mounted on the vehicle trim, and preferably incorporates sensors (49, 50, 51, 52) by means of which it can be detected that the cellular telephone (1) has been inserted into the holster arrangement (3) and/or the latter snap-fitted into the console (5), and by means of which corresponding functions can be switched on and off, the respective signalling sensor preferably being a reed relay.

16. Holster arrangement (3) according to any of claims 10 to 15, **characterised by** a plug connector of a divisible interface (47, 53, 70) for the transmission of electrical energy and/or signals to the cellular telephone (1) with a spring-loaded connector cover (55) adapted to be moved over the connector of the interface in order to protect the connector contacts whenever the cellular telephone (1) is removed, the connector cover (55) having an actuating part (59) which projects into the holding compartment (6) of the holster arrangement (3) and which by the movement of inserting the cellular telephone (1) into the holding compartment (6) releases the contacts for a connection to the cellular telephone (1).

17. Holster arrangement (3) according to claim 16,
**characterised in that** the connector cover (55) is in the form of a bar which is adapted to swivel on an axis and having a cavity (57) open on one side which receives the contacts when it is in the swivelled-out state and preferably has a protruding nose designed to bear against the underside (60) of the cellular telephone, and a depression (61) in the lower peripheral region of the holding compartment (6) for swivelling-in whenever the cellular telephone (1) is inserted.

18. Holster arrangement (3) according to any of claims 10 to 17, **characterised by** an earpiece and/or mouthpiece which is/are adapted to be activated when the cellular telephone (1) is removed, to enable a further person to take part in a conversation being held on the cellular telephone (1).

## Revendications

1. Appareil téléphonique, en particulier pour l'utilisation dans un véhicule, avec un téléphone portable (1) et un dispositif de réception (3), dans l'espace de logement (6) duquel, le téléphone portable (1) peut être retiré, et qui est maintenu avec au moins un dispositif de retenue disposé sur l'un des petits côtés de l'espace de réception, moyennant quoi le dispositif de retenue comporte au moins un élément de retenue (15) qui, lors de l'introduction dans le dispositif de réception (3), emprisonne automatiquement, partiellement par le dessus l'une des zones de surface du téléphone portable (1) et moyennant quoi, il est prévu un élément de poussée (31, 45) qui amène le téléphone portable (1) hors de l'espace de réception (6) dans une position de préhension, **caractérisé en ce que** l'élément de retenue (15) est conçu de façon à pouvoir être poussé vers l'extérieur pour la libération du téléphone portable (1) dans la direction de son axe longitudinal, et en particulier de façon à pouvoir pivoter.

2. Appareil téléphonique selon la revendication 1, **caractérisé en ce que** l'élément de retenue mobile (15) est verrouillé automatiquement en position de retenue avec un dispositif de verrouillage (21, 20) qui se verrouille automatiquement lors de l'introduction du téléphone portable (1) dans l'espace de réception (6) du dispositif de réception (3).

3. Appareil téléphonique selon l'une des revendications 1 ou 2, **caractérisé en ce que** le dispositif de retenue (7) comportant l'élément de retenue mobile (15) présente un bouton de déclenchement (19) sur son côté supérieur pour le déclenchement d'un verrouillage de retenue, bouton de déclenchement dont le côté supérieur fait suffisamment saillie, de façon à pouvoir être effleuré sans toutefois pouvoir être déclenché involontairement par contact avec un objet approximativement plat, et dont la section transversale est cependant sélectionnée de façon suffisamment grosse pour pouvoir être comprimée pour le déclenchement avec un doigt sous la surface de l'élément de retenue (15).

4. Appareil téléphonique selon l'une des revendications 1 à 3, **caractérisé en ce que** le dispositif de retenue (7) comportant l'élément de retenue mobile (15) comporte un élément de poussée (31) qui soulève le téléphone portable (1) à l'état de libération pour, de préférence, venir à bout de son blocage latéral dans l'espace de réception (6) et/ou venir à bout d'un blocage de contact dans une fiche amovible (53, 70) et, en particulier lors de l'introduction du téléphone portable (1), exerce une action sur l'élément de poussée (31) pour amener le dispositif de retenue mobile (7) dans une position de verrouillage automatique.

5. Appareil téléphonique selon l'une des revendications 1 à 4, **caractérisé par** un coulisseau (45) disposé dans l'espace de réception (6) et maintenu de façon élastique, qui soulève le téléphone portable (1) en dehors du dispositif de réception (3) lors de la libération par le dispositif de retenue mobile (7) dans une position permettant une bonne préhension.

6. Appareil téléphonique selon l'une des revendications 1 à 5, **caractérisé par** une console de retenue (5) pouvant être disposée en particulier sur un habillage d'automobile, console dans laquelle le dispositif de réception (5) peut être encliqueté, ainsi que, de préférence, des capteurs (49, 50, 51, 52) qui déterminent l'état introduit du téléphone portable (1) dans le dispositif de réception (3) et/ou son état encliqueté dans la console (5) et ouvrent ou ferment les fonctions correspondantes, le capteur correspondant étant, de préférence, un relais à anche ou relais à contact scellé (reed).

7. Appareil téléphonique, en particulier selon l'une des revendications 1 à 6, avec une interface séparable (47, 53, 70) pour la transmission de l'énergie électrique et/ou des signaux entre le téléphone portable (1) et un dispositif de réception (3), **caractérisé par** un couvercle de fiche (55) pouvant être amené sur ces fiches pour la protection des contacts à fiche avec le téléphone portable (1) sorti de son dispositif de réception (3), moyennant quoi le couvercle de fiche (55) comporte un élément d'actionnement (59) faisant saillie dans l'espace de réception (6) du dispositif de réception (3) qui, par le mouvement d'enfichage du téléphone portable (1) dans l'espace de réception (6), libère les contacts pour une liaison avec le téléphone portable (1).

8. Appareil téléphonique selon la revendication 7, **caractérisé en ce que** le couvercle de fiche (55) est conçu sous forme de verrou pivotant autour d'un axe avec un espace creux ouvert sur un côté (57) qui, dans l'état de pivotement à l'extérieur, reçoit les contacts et, de préférence, comporte un talon faisant saillie pour l'appui sur le côté inférieur du téléphone portable (60), ainsi qu'une dépression (61) dans la zone marginale inférieure de l'espace de réception (6) pour le pivotement vers l'intérieur avec le téléphone portable introduit (1).

9. Appareil téléphonique selon l'une des revendications 1 à 8, **caractérisé en ce que** le dispositif de réception présente un combiné écouteur et/ou microphone qui, avec le téléphone portable (1) enlevé, peut ou peuvent être activés afin de permettre à un autre correspondant de participer à une conversation menée avec le téléphone portable (1).

10. Dispositif de réception (3) d'un appareil téléphonique selon l'une des revendications 1 à 9, avec un espace de réception (6) pour un téléphone portable (1) de l'appareil téléphonique, retiré dudit espace de réception (6), moyennant quoi l'espace de réception (6) comporte au moins un dispositif de retenue disposé sur l'un de ses petits côtés, dispositif de retenue qui comporte au moins un élément de retenue (15) qui est conçu de telle sorte que, lors de l'introduction du téléphone portable (1) dans le dispositif de réception (3), il vient partiellement emprisonner automatiquement par le dessus les zones de surface du téléphone portable (1), et en ce qu'il est prévu un élément de poussée (31, 45) avec lequel le téléphone portable (1) peut être sorti de l'espace de réception (6) pour être amené dans une position de préhension, **caractérisé en ce que** l'élément de retenue (15) pour la libération du téléphone portable (1) est déplaçable dans la direction de son axe longitudinal vers l'extérieur, et en particulier, de façon à pouvoir pivoter.

11. Dispositif de réception (3) selon la revendication 10, **caractérisé en ce que** l'élément de retenue mobile (15) est verrouillé mécaniquement dans la position de retenue avec un dispositif de verrouillage (21, 20) qui se verrouille automatiquement lors de l'introduction du téléphone portable (1) dans l'espace de réception (6) du dispositif de réception (3).

12. Dispositif de réception (3) selon la revendication 10 ou 11, **caractérisé en ce que** le dispositif de retenue (7) comportant l'élément de retenue mobile (15) présente sur son côté supérieur un bouton de déclenchement (19) pour le déclenchement d'un verrouillage de retenue dont le côté supérieur fait suffisamment saillie pour être détectable mais ne peut être déclenché involontairement par contact avec un objet approximativement plat, dont la section transversale est toutefois sélectionnée de façon à pouvoir être comprimée pour le déclenchement avec un doigt sous la surface de l'élément de retenue (15).

13. Dispositif de retenue (3) selon l'une des revendications 10 à 12, **caractérisé en ce que** le dispositif de retenue (7) comportant l'élément de retenue mobile (15) comporte un élément de poussée (31) avec lequel le téléphone portable (1) peut être soulevé dans l'état de libération pour, de préférence, venir à bout d'un blocage latéral dans l'espace de réception (6) et/ou pour venir à bout d'un blocage de contact dans une fiche amovible (53, 70) et, en particulier, l'élément de poussée (31) est conçu de telle sorte que, lors de l'introduction du téléphone portable (1), celui-ci agit sur l'élément de poussée (31) pour amener le dispositif de retenue mobile (7) dans une position de verrouillage automatique.

14. Dispositif de réception (3) selon l'une des revendications 10 à 13, **caractérisé par** un coulisseau (45) disposé dans l'espace de réception (6), maintenu de façon élastique, avec lequel le téléphone portable (1) peut être soulevé hors du dispositif de réception (3) lors de la libération par le dispositif de retenue mobile (7) dans une position permettant une bonne préhension.

15. Dispositif de réception (3) selon l'une des revendications 10 à 14, **caractérisé en ce qu'**il peut être encliqueté dans une console de retenue applicable, en particulier, sur l'habillage d'un véhicule et, de préférence, comporte des capteurs (49, 50, 51, 52) avec lesquels l'état introduit du téléphone portable (1) dans le dispositif de réception (3) et/ou l'état encliqueté dans la console (5) peut être déterminé et avec lesquels les fonctions correspondantes peuvent être ouvertes ou fermées, le capteur respectif étant, de préférence, un relais à anche ou reed.

16. Dispositif de réception (3) selon l'une des revendications 10 à 15, **caractérisé par** une fiche d'une interface séparable (47, 53, 70) pour la transmission de l'énergie électrique et/ou des signaux au téléphone portable (1) avec un couvercle de fiche (55) sollicité par ressort et pouvant être amené sur la fiche de l'interface pour la protection des contacts à fiche avec le téléphone portable détaché (19), le couvercle de fiche (55) comportant un élément d'actionnement (59) faisant saillie dans l'espace de réception (6) du dispositif de réception (3) qui, par le mouvement d'enfichage du téléphone portable (1) dans l'espace de réception (6), libère les contacts pour une liaison avec le téléphone portable (1).

17. Dispositif de réception (3) selon la revendication 16, **caractérisé en ce que** le couvercle de fiche (55) est conçu sous forme de verrou pivotant autour d'un axe avec un espace creux (57) ouvert sur un côté qui, dans l'état de pivotement à l'extérieur, reçoit les contacts et, de préférence, comporte un talon faisant saillie pour l'appui sur le côté inférieur (60) du téléphone portable, ainsi qu'une dépression (61) dans la zone marginale inférieure de l'espace de réception (6) pour le pivotement vers l'intérieur avec le téléphone portable (1) introduit.

18. Dispositif de réception (3) selon l'une des revendications 10 à 17, **caractérisé par** un combiné avec écouteur et/ou microphone, combiné qui, avec le téléphone portable enlevé (1), peut ou peuvent être activés afin de permettre à un autre correspondant de participer à une conversation menée avec le téléphone portable (1).
